Europäisches Patentamt

European Patent Office

Office européen des brevets

(11) Publication number: **0 529 759 A2**

# EUROPEAN PATENT APPLICATION

(21) Application number: 92300904.7

(22) Date of filing: 03.02.92

(51) Int. Cl.⁵: **H04B 1/66**

(30) Priority: **26.08.91 US 749921**

(43) Date of publication of application:
**03.03.93 Bulletin 93/09**

(84) Designated Contracting States:
**AT BE CH DE ES FR GB IT LI NL SE**

(71) Applicant: **Chang, Po-Lain**
**No. 3, Lane 251, Ming-Chu Road**
**Lungtan, Taoyuan(TW)**

(72) Inventor: **Chang, Po-Lain**
**No. 3, Lane 251, Ming-Chu Road**
**Lungtan, Taoyuan(TW)**

(74) Representative: **Barlow, Roy James**
**J.A. KEMP & CO. 14, South Square, Gray's**
**Inn**
**London WC1R 5LX (GB)**

(54) **Single frequency, duplex/multiplex radio communication system.**

(57) A radio communication system serves duplex/multiplex communication purpose by means of signal compression, expansion and time exchange procedures. The application of the fundamentals of single-frequency, duplex/multiplex communication systems involves signal compression and time exchanging procedures, such that the audio (phonetic) signals in a given unit of time Tu, exchanged between both sides of a communication link, can be divided and compress by means of the digital skills, into at most 1/N Tu (N is the number of users), for alternative transmission to the partner on the other side. Then the signals are converted into the original signal on the receiving partner. The advantages of the present invention includes.

FIG. 1

## BACKGROUND OF THE PRESENT INVENTION

The present invention relates to a radio communication system which employes signal compression, reproduction and time exchanging technology to serve single-frequency duplex/multiplex operation purposes.

In radio communication systems those more often in use are typically of the Half-Duplex modes (HDX), including, for instance, the regular radio telephone sets; and the application-increasing so-called Full-Duplex (FDX) telex-communication systems, such as household radio telephones and mobile telephones. By the term Half-duplex radio communication system it refers to a situation where both sides in a common communication link transmit their messages alteratively via a common given channel, which has one major shortcoming, that is, in a given instant while a user A is transmitting signals to a user B, the user B can only receive the signals being transmitted by the user A. That is, when user A is speaking, user B can only listen rather than speak via the same channel. If user B speaks out together with user A, it would simply serve to nothing because nothing can be received by the prior user on the link, namely, user A. Therefore, in operating a HDX system, both users will have to reach some sort of common understanding agreeing on the time to be allotted for transmission by either user before hand, so as to assure complete, omission-free exchange of bilateral messages.

It is indeed in view of such shortcomings as are inevitable with HDX operations that Full-Duplex radio communication system or so-called two-frequency Duplex system was introduced, which employs two channels to transmit messages intended from both users, so that both users on the link can listen and speak at the same time, and their messages can be freely, completely expressed and transmitted. But since the power of the signal to be transmitted via the transmitter is far greater than that of the signal to be received in the receiver, it is considered necessary to adopt the following methods to keep the receiver free from interference (jamming effects) owing to the transmitter: (1) Separation of transmission channel from reception channel, which is 45 MHz apart in the case of the mobile telephone system currently in use in Taiwan; but, consistent increase of users has increasingly narrowed down the air frequency, and it will be more and more difficult for users to find a channel that is suitable for full-Duplex operation in a given distance, moreover, operation at a relatively low frequency can even give rise to difficulties in so far as antenna design is concerned; (2) Installation of Duplex devices which are unidirectional instruments, and which can minimize the transmitter-to-antenna impedance, with the transmitter-to-receiver impedance kept at a maximum and reduce the antenna-to-receiver impedance with the antenna-to-transmitter impedance at a maximum, which manner does serve to reduce interference owing to the transmitter, it incurs cost issue at the same time.

## SUMMARY OF THE PRESENT INVENTION

In view of the inconvenience associated with a HDX system which denies the possibility for free two-way communication at the same time, also of a FDX system which involves difficulties concerning the availability of usable channels, one object of the present invention is to provide a new radio communication system which occupies only one channel, yields effects quite similar to a FDX/multiplex system. The present invention needs not to consider the multi-channels and the frequency separations, the problems due to the duplex devices and the wide-frequency antenna which have to be taken into account in a conventional FDX system.

Another object of the present invention is to provide a new radio communication system which basically makes use of the signal compression, expansion and time exchange technology to perform a duplex or multiplex communication functions. Specifically, in the design of the present invention, the phonetic signal transmitted by both sides in a communication link in a given unit of time are divided and compressed by means of digital techniques to a period no more than half the unit time. Then the compressed phonetic signals are alternately transmitted to either of both sides and is expanded to the original signal to serve the purpose of single-frequency duplex operation or single-frequency multiplex communication.

The present invention further comprises system control units used for controlling signal compression, signal expansion and signal sampling. The control unit is served to compress the contents of each message unit according to the desired ratio for transfer to the receiver in the other unit in a relatively short time period. The receiver in the other unit then expand, interconnect and reproduce the compressed signals to the original phonetic signals at the same time. The invention further provides synchronism devices to synchronize the duplex/multiplex communication.

BRIEF DESCRIPTION OF THE DRAWINGS:

Further description of the invention will proceed with reference to the following drawings in which:

Fig. 1 is a block diagram of the single-frequency Duplex Communication system according to the invention;

Fig. 2a, 2b and 2c, 2d are the system timing diagrams, wherein Fig. 2a and Fig. 2c illustrate user A and user B transmitting compressed signals alternately to each other in a communication link respectively, and Fig. 2b and 2d illustrate user B and user A receiving and reproducing the compressed signals in the communication link respectively;

Fig. 3 is a detailed circuitry block diagram of the single-frequency duplex system according to the present invention;

Fig. 4a and 4b illustrate respectively the time-sequences block diagram to show how the communication system of Fig. 3 compresses signals in a link;

Fig. 5a, 5b illustrate respectively the time-sequences block diagrams to show how the communication system of Fig. 3 reduces the received compressed signals in a link;

Fig. 6a, 6b, and 6c, 6d are the system timing diagrams showing the users receiving and compressed signals transmitted by other users of another embodiment of the present invention, wherein Fig. 6a and Fig. 6c illustrate user A and user B transmitting compressed signals alternately to each other in a communication link respectively, and Fig. 6b and 6d illustrate user B and user A receiving and expanding the compressed signals in the communication link respectively; and

Fig. 7 is a block diagram of a single-frequency Multiplex radio communication system according to the invention.

DETAILED DESCRIPTION OF THE PREFERRED EMBODIMENT

A single-frequency Duplex/Multiplex communication system employing signal compression, expansion and time exchange techniques of the present invention is a unique, fast-exchanging Half-Duplex system, in which both of the users can alternatively transmit and receive radio signals in a same time-base. That is, the period of transmission and reception of the radio signals in either user will occupy 1/N (N = number of the users) of the total communication time, but all the intended message on either of the users can be entirely transmitted to the other users in the period. That is because that the radio signals are delivered from a first user to the second user within 1/N of the total communication time after having been compressed on the first user, then the compressed radio signals are expanded and reproduced to the original signals on the second user and finally are transmitted out from a speaker so that what the second user can hear via the link the first user's complete and uninterrupted voice.

The single-frequency full duplex/multiplex system of the present invention is developed by the utilization of the above principle. To explain the theorical concept of the present invention, the following will take the example of a single-frequency duplex system.

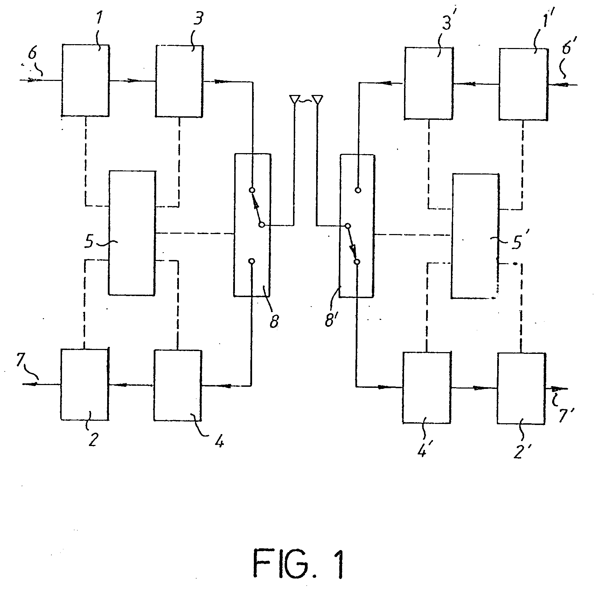

Fig. 1 shows a schematic block diagram of a single-frequency duplex communication System in accordance with the present invention, wherein A and B represent a user A and a user B respectively who are talking each other by the communication system of the present invention. Assume that the user A is transmitting signals to the user B and the user B is receiving the signals. In the block as shown, the key components used in the invention system include signal compression units 1, 1', signal expansion units 2, 2', transmitters 3, 3', receivers 4, 4', system control units 5, 5', microphones 6, 6', speakers 7, 7', and transmitter/receiver switches 8 and 8' (1', 2', 3', 4', 5', 6', 7' and 8' referring to corresponding parts on the user B). In the same figure, the concrete line stands for signal transmission line, the arrow indicates the direction of transmission, whereas the arrow which is seen inside the transmitter/receiver switches stands for the switch position, and the dot line represents the control signal line. The original audio signals of the user A are fed in the system via the microphone 6, then are compressed by the compression unit 1 to shorten the time necessary for transmission, and transmitted to the user B via the transmitter 3. The transmitted signals are received by the receiver 4' of the user B and is expanded and reproduced by the signal expansion unit 2' to the original signals, then are released out via the speaker 7'. The same procedure applies for the user B sending his/her signals to the user A. The system control units 5, 5' can be microprocessors which are used for controlling the operation time sequence of all the other four components as well as link synchronization.

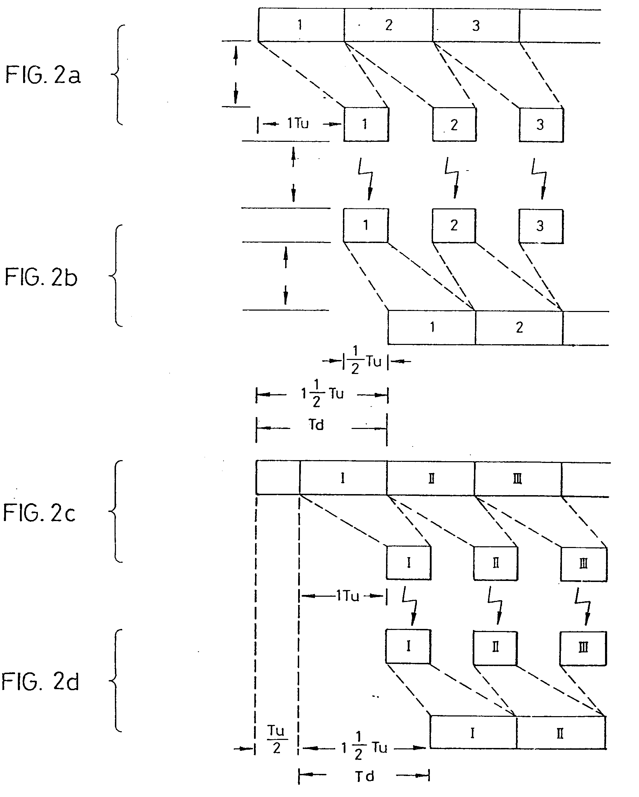

The operation procedures of compressing the signals and expanding the signals in a duplex phase according to the invention are illustrated in Fig. 2a through Fig. 2d, with Fig. 2a and Fig. 2c illustrating the transmission status taking place on the users A and B respectively, and Fig. 2b and Fig. 2d illustrating the receiving status on the users A and B respectively. The original audio signal coming from the user A is firstly divided into several equal segments, as shown in Fig. 2a, with each segment being termed a time unit Tu. The signals in the first time unit Tu are subjected to digital processing and storage procedure to be compressed in half the time unit but delay for one time unit for transmission. Also as indicated in Fig. 2b, on the user B's side, the receiver 4' thereof receives these compressed signals at the same time as the signals are transmitting that is executed on the user A's side and then the received compressed signals are expanded and reproduced to one time unit by the signal expansion unit 2' on the subscriber B's side. The same procedure applies to all the transmission of the signals in respective sequential time units to the subscriber B.

Referring to Fig. 2a and Fig. 2b, it will be appreciated that it will only use half of the transmission time for the user A to transmit all the intended message thereof to the user B, likewise, the user B make use of the other half of the transmission time to transmit all intended message thereof to the user A, thereby achieving the single-frequency duplex communication operation.

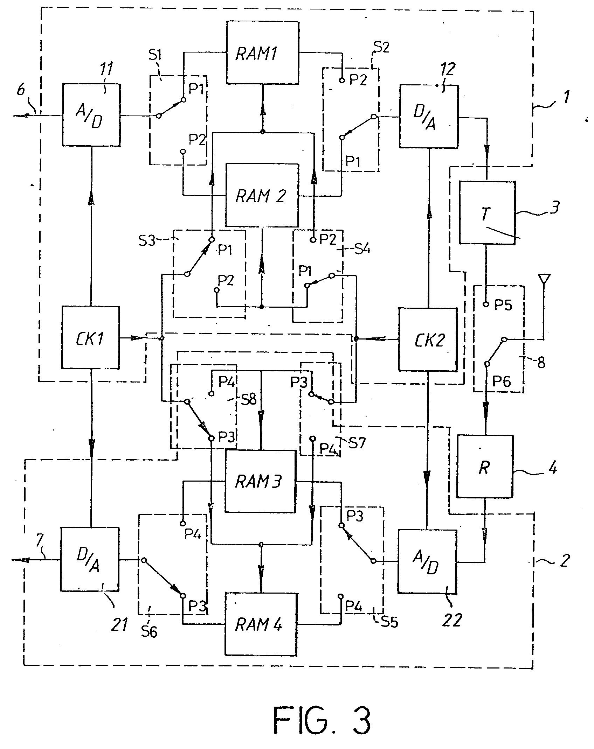

Now the signal compression and signal reproduction procedures in accordance with the present invention are described hereinafter with reference to the schematic block diagram shown in Fig. 3. As shown in the drawing, it is noted that the compression of the signal transmission time is not a real-time compression, but rather a procedure in which the time occupied for signal transmission is shortened using a slow-write, fast-read technique performed for audio access by means of a Random Access Memory (RAM); signal recovery or signal expansion is executed similarly but in a contrary procedure characterized by fast-deposit, slow-retrieval in an effort to recover the proper time length of the incoming signals.

Further description of the invention will be made by dealing with the operation principles of the signal compression unit and the signal expansion unit. In Fig. 3, the block in dot line denoted by reference number 1 represents the diagram of the compression unit (which is identified to that shown in Fig. 1), wherein RAM 1 and RAM 2 stand for two random Access Memories each with a memory volume sufficient to store a total original audio signal in one time unit. The compression unit 1 further comprises an analog/digital (A/D) converter 11 and a digital/analog (D/A) converter 12, respectively with a sample frequency rate CK1 and CK2 which the value of CK2 must be at least twice of that of CK1, so as to comply with the afore-mentioned slow-deposit, fast-retrieval requirement. The elements denoted by S1, S2, S3 and S4 are four switches and each thereof has two position settings P1 and P2. The user's speeches (analog signals) are accessed into the signal compression unit 1 via the microphone 6 and then pass firstly the A/D convertor 11 whereby the analog signals are digitalized with the sample rate CK1 and stored into RAM 1. When RAM 1 is filled full with the digital signals corresponding to one time unit in a duplex communication in-process, will actuate the control unit, denoted by reference number 5 in Fig. 1, to switch the switches S1, S3 to the position setting P2 so that the signals for the next time unit are beginning to be stored in RAM 2. At the same time, the switches S2, S4 will switch to RAM 1, that is, position settings P2 on S2 and that on S4, to read the digital signals stored in RAM 1 at a higher sample rate CK2. According to the above, the read sampled signals are then converted into digital signals with higher frequency and shorter time length via the D/A converter 12 whereby the compression of the signals in a time unit is accomplished.

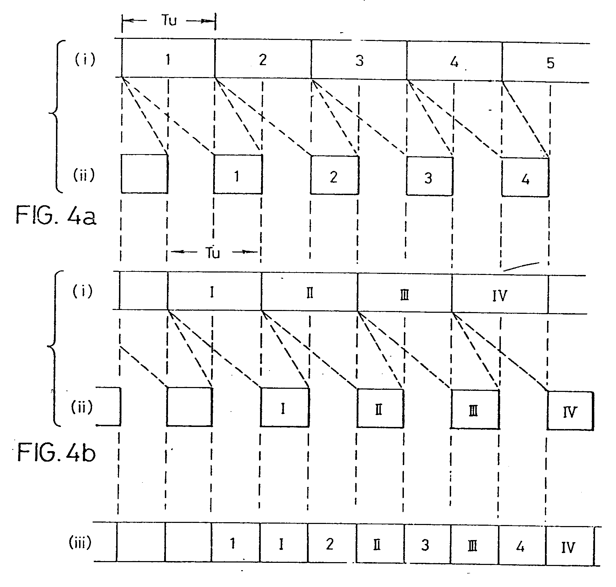

Since the data in RAM 1 is read at the higher sample rate CK2, data in RAM 1 will have been read out completely when the digital signals corresponding to or confined in one time unit are stored fully in RAM 2. Then the switches S1, S3 can once again be switched back to RAM 1, that is, position P1, so as to store the digital signals in next time unit into RAM 1. In the meantime, the switches S2, S4 will also be switched back to the position P1, whereupon the D/A convertor 12 will also convert the digital signals in RAM 2 at the sample rate CK2, i.e., converting the original audio signals into compressed analog signals, by then the compression of the original signals confined in the second time unit will be accomplished. The foregoing procedure can be better appreciated by referring to the time-sequence block diagram illustrated in Figs. 4a and 4b, wherein the procedure goes by compressing the signal in halves and Fig. 4a represents the signal compression executed on the user A's side, and Fig. 4b represents the signal compression executed on the user B's side. It is noted that the occupied time for compression on both sides is crosswise relative to each other so as to ensure that signals compressed on both sides of the communication link can be transmitted on a same channel alternatively for reception by each other.

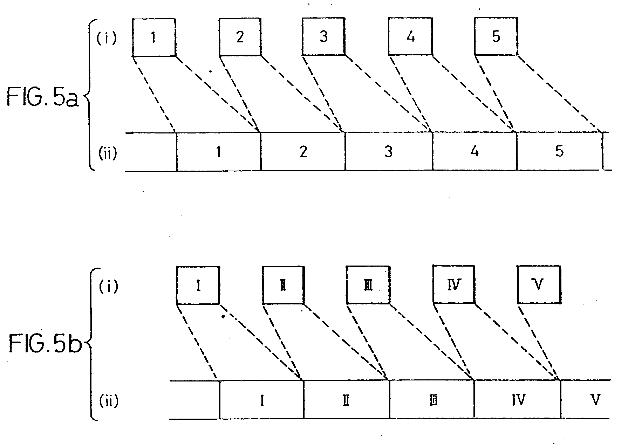

Figs. 5a and 5b illustrate the schematic diagrams of the expansion procedure of the compressed signals when the users A and B receive the transmitted signals from each other, respectively. The basic block diagram for the signal expansion unit 2 coincides with that denoted under reference number 2 shown in Fig. 3 which also comprises two Random Access Memories RAM 3 and RAM 4 of exactly the same type, a A/D converter 22, a D/A converter 21 and four switches S5, S6, S7 and S8. The basic circuitry of the signal expansion unit 2 is similar to the signal compression unit 1, except that in this instance the A/D convertor 22 samples the signals with the sample rate CK2, and the D/A convertor 21 samples with the sample rate CK 1, just contrary to what is the case of the signal compression unit 1. The elements referenced by S5, S6, S7 and S8 represent four switches; P3, P4 represent two setting positions on each of these four switches and which need not be the same in sequential order. The switch 8 (the same as the element denoted by 8 in Fig. 1) is used to choose what function the system does (e. g. transmitting or receiving function). Assume that the system is used to receiving the signals and the receiver 4 now is receiving the signals transmitted from the other user. After the signals are picked up by the receiver 4, the signals are firstly digitalized at the A/D converter 22 at a rapid sample rate CK2 and be stored in RAM 3. When RAM 3 is stored with the signals of a time unit, the control unit 5 will automatically switch the switches S5 and S6 to the position P4 to facilitate accessing of the next incoming compressed signals to RAM 4, meanwhile reads the signals stored in RAM 3 at the sample rate CX 1. The D/A converter 21 then convert the read digital signals to be the audio signals which are corresponding to the length of a time unit. When RAM 4 has stored with the signals of a time unit, the switches will once again be switched to make the sequential signals to be stored in RAM 3 and reads and converts the signals of RAM 4 at sample rate CK1 to be original audio signals.

Now once again referring to the timing schematic for signal expansion in Fig. 5a and Fig. 5b which more specifically illustrate the process of the expansion of the incoming, compressed signals that are transmitted from the other user with Fig. 5a standing for the user A's side, and Fig. 5b for the user B's side. The portion (i) in Fig. 5a denotes the compressed signals as received by the user A, and that (i) in Fig. 5b denotes the compressed signal as received by the user B; the portion (ii) in Fig. 5a and that (ii) in Fig. 5b denotes the original audio signals as expanded and interconnected section by section.

It will be appreciated that in the circuit structure of the invention, the functions like elements switching, operation and signal compression/expansion are all under the command of the control unit 5 which, in addition to controlling the signal compression unit, the transmitter, the signal expansion unit and the receiver to perform proper functions as required and when is necessary, can produce a standard clock to make for the time standard for all controlled signals, it can in addition control the clock at each user so as to set all of them in synchronism.

The control unit 5 can be designed by digital logic circuits or employing microprocessor and operated by software. Generally speaking, commercial ICs such as 8051, 8048 and others can be applied for the control purpose as such.

Since in the compression and expansion processes, the signals must be deposited into memories before it is sampled at a different sample rate, such depositing, sampled procedures inevitably give rise to signal delay, as can be seen in Fig. 2a, wherein the original audio signal transmitted from the user A in a duplex communication link is delayed a time unit owing to the compression process, whereas the incoming compressed signal which arrives at user B's side, as illustrated in Fig. 2b, is further delayed half a time unit after the reduction process. Therefore, a total of 3/2 of time unit will be delayed in going from the moment a compressed signal is transmitted to the moment the same is reduced to its original state. Suppose that the original signal is triply compressed, then one time unit will be delayed owing to the compression process, but the delay incurred in the expansion process is only 1/3 of one time unit, so by inference a formula can be established concerning the time delay Tdt caused by the compression/expansion procedure, for an original signal which is compressed P times, which is:

$$Td = \frac{P + 1}{P} Tu$$

wherein Td is the delay time of reproduction of the signals.

In the design stage it is proposed that a unit time be set at 100 ms, but which should be 150 ms instead if the compression is double, which delay anyway is very short and no user can perceive such a delay at all.

For the purpose of description, the embodiment described hereinbefore utilizes normal RAMs so as to explain the concept of the present invention. The delay time of reproduction also can be eliminated by using a kind of RAM which can be read and written in a same time with different clocks. Take an example of a duplex communication system, if the signals are compressed by P times, the delay time Td' would be changed from

$$Td = \frac{P + 1}{P} \, Tu$$

to

$$Td' = \frac{P - 1}{P} \, Tu$$

Assume that P equals to 2, then the delay time

$$Td' = \frac{2 - 1}{2} \, Tu = 1/2 \, Tu$$

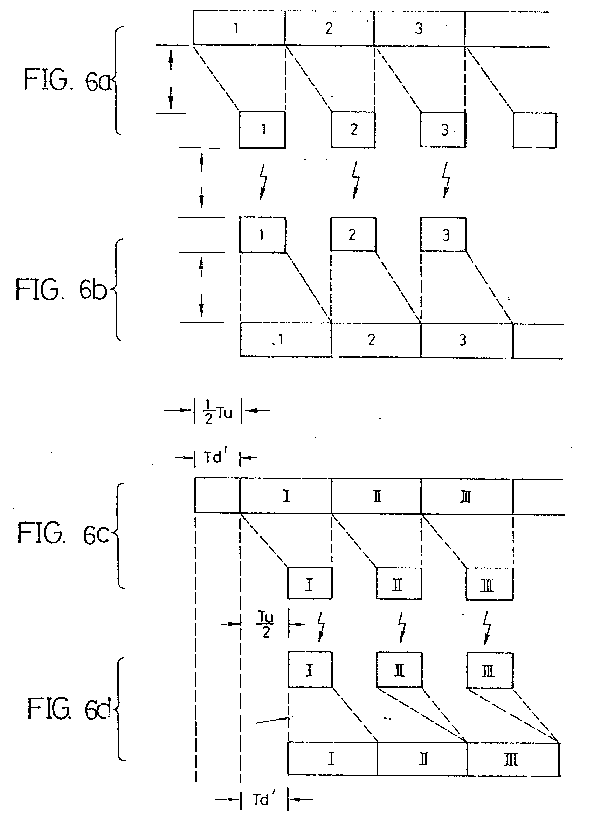

as shown in Fig. 6a-6d.

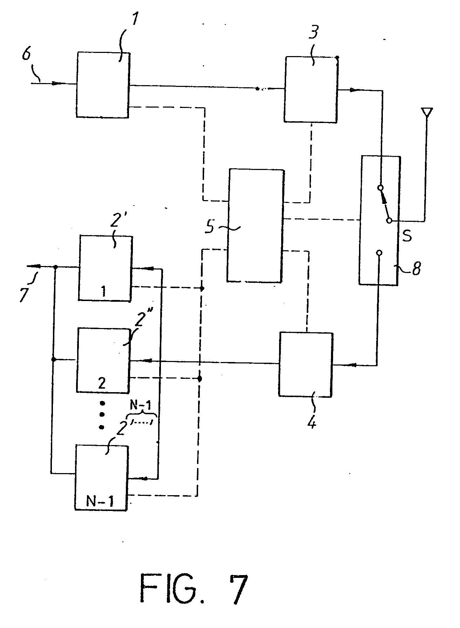

Since the digital compression/expansion technique employed under the invention is immune to any restraint on compression/expansion ratio, it permits the increase of the number of the users by raising the compression-to-expansion ratio, the only difference being that the signal transmission term can be compressed even shorter so as to leave more time to receive the compressed incoming signals transmitted from the other users. Taking an example of three users wishing to communicate each other on a single-frequency multiplex radio communication link, it is advisable to compress an original signal more shorter so that it can makes possible for the three users to share the same link to execute transmission of the compressed signals by alternatively within a given time unit. In an optimum condition where the exchange time is zero all that needs to be done is to triply compress the original signal confined in 1/3 of a time unit, thus leaving the remaining 2/3 of a time unit available to pick up the signals transmitted from the other two users sharing the same link. Further, since the same channel is used, in picking up the compressed signals which are transmitted from the other two associate users, just one receiver will do the entire job, but then two more expansion units are needed to reproduce the compressed signals came from said associate users respectively. In addition, the system of the invention can be further expanded to encompass multiplex communication links, for instance, quadruple, quintuple ones, on a common and single channel, an example of which is as illustrated in Fig. 7.

Moreover, in the single-frequency duplex/multiplex communication system of the present invention, except the channel and modulation considerations, the parameters like the length of unit time, compression multiplications and synchronization can also affect the linkup of communication. In consideration of this implication it is possible to foresee certain unique confidential features by arranging the combination/permutation of such parameters, especially with regard to synchronism and microprocessor controls.

In view of the above, the single-frequency duplex/multiplex communication system of the present invention is truly a worthwhile one in that it embodies altogether many of the advantages which are unique in prevailing two-frequency duplex and Half Duplex systems. It must be pointed out altogether that the fast development of huge size digital ICs and microprocessors nowadays will soon make possible admirable reduction of the volume of the digital circuits used in the invention system, while promoting its precision level and flexibility of system control at the same time, which will doubtless further upgrade the feasibility of the invention for mass application, it must be pointed out in particular that the foregoing disclosure is only given by way of example, with reference to a non-limiting embodiment, and the invention can only be defined in the scope of the claims as stated in the subsequent paragraphs.

**Claims**

1.  A single-frequency, multiplex radio communication system comprising N communication units (N is 2 or an integer more than 2) which utilizes signal compression, signal expansion and time exchange techniques to achieve full multiplex communication purpose, each of the communication units including:

    a signal compression unit to compress audio signals in a time unit intended for transmission to another communication unit(s) by means of digital processing, so that the signals can be transmitted in no more than 1/N time unit;

    a transmitter to transmit the audio signals after compression in the form of time units to another communication units(s);

    a receiver to receive the transmitted compressed audion signals;

    a number of signal expansion units which can reproduce the compressed signals received by the receiver to original audio signals in a procedure that is exactly the contrary of the signal compression process; and

    a control unit to control the compression/expansion, transmission, reception of the signals and the system synchronization as well.

2.  A system as claimed in claim 1, which also can be applied to wired communication systems involving cable-to-cable transmission.

FIG. 1

FIG. 2a {

$\left|\text{—}\right.$ 1Tu $\left.\text{—}\right|$

FIG. 2b {

$\text{—}\left|\frac{1}{2}\text{Tu}\right|\text{—}$

$\left|\text{—} 1\frac{1}{2}\text{Tu} \text{—}\right|$

$\left|\text{—} \text{Td} \text{—}\right|$

FIG. 2c {

I    II    III

I    II    III

$\text{—}$ 1Tu $\text{—}|$

FIG. 2d {

I    II    III

I    II

$\frac{\text{Tu}}{2}$    $\text{—} 1\frac{1}{2}\text{Tu} \text{—}$

$\text{—} \text{Td} \text{—}$

FIG. 3

FIG. 4a

FIG. 4b

FIG.5a

FIG.5b

FIG. 6a

FIG. 6b

FIG. 6c

FIG. 6d

FIG. 7